# EUROPÄISCHE PATENTANMELDUNG

(11) **EP 0 936 822 A2**
(43) Veröffentlichungstag der Anmeldung: **18.08.1999**
(21) Anmeldenummer: 99440014.1
(22) Anmeldetag: 29.01.1999
(51) Int. Cl.: H04Q 3/00

(54) **Verfahren zur Übermittlung von Dienst-Signalisierungsnachrichten, Konvertierungsknoten und Dienststeuereinrichtung**

(30) Priorität: 12.02.1998 DE 19805686
(71) Anmelder: ALCATEL, 75008 Paris (FR)
(72) Erfinder: Lautenschlager, Wolfgang, 71287 Weissach-Flacht (DE); Stahl, Uwe, 71229 Leonberg (DE)
(74) Vertreter: Zinsinger, Norbert

(57) **Zusammenfassung**

Die Erfindung betrifft ein Verfahren zur Übermittlung von Dienst-Signalisierungsnachrichten zwischen Vermittlungsstellen (SW1, SW2, SW3, SW6, SW7), die einem Kommunikationsnetz oder verschiedenen Kommunikationsnetze (KN1, KN2) zugeordnet und über ein Signalisierungsnetz verbunden sind, sowie einen Konvertierungsknoten zum Anschluß an ein Signalisierungsnetz und eine Dienststeuereinrichtung zum Anschluß an ein Kommunikationsnetz. Eine Dienst-Signalisierungsnachricht (ISSM(GT), ISSM(GT'), (ISSM(SPC)) wird gemäß einer in der Dienst-Signalisierungsnachricht eingetragenen Zielkennung (GT, GT', SPC) durch das Signalisierungsnetz von einer Ursprungsvermittlungsstelle zu einer Zielvermittlungsstelle geleitet. Die Ursprungsvermittlungsstelle sendet die Dienst-Signalisierungsnachricht (ISSM(GT)) mit einer Teilnehmerkennung (GT) eines Teilnehmers der Zielvermittlungsstelle als Zielkennung ab. Diese Dienst-Signalisierungsnachricht (ISSM(GT)) wird zu einem Konvertierungsknoten (CP) geleitet. Der Konvertierungsknoten (CP) liest die Zielkennung aus der Dienst-Signalisierungsnachricht aus und ersetzt die Zielkennung durch eine der Teilnehmerkennung (GT) zugeordnete portierte Teilnehmerkennung (GT'), wenn die Teilnehmerkennung einem portierten Teilnehmer zugeordnet ist. Der Konvertierungsknoten (CP) ermittelt die zugeordnete portierte Teilnehmerkennung (GT') durch Zugriff auf eine beim Aufbau von Nutzkanalverbindungen verwendete Portierungs-Datenbank (NPDB).

## Beschreibung

Die Erfindung betrifft ein Verfahren zur Übermittlung von Dienst-Signalisierungsnachrichten zwischen Vermittlungsstellen nach dem Oberbegriff von Anspruch 1, einen Konvertierungsknoten zum Anschluß an ein Signalisierungsnetz nach dem Oberbegriff von Anspruch 8, und eine Dienststeuereinrichtung zum Anschluß an ein Kommunikationsnetz nach dem Oberbegriff von Anspruch 9.

Die Erfindung geht von der üblichen Übermittlung von Dienst-Signalisierungsnachrichten im CCITT Signalisierungssystem Nr. 7 aus.

Zur Bereitstellung von speziellen ISDN-Diensten (ISDN = Integrated Services Digital Network) senden sich Vermittlungsstellen eines Kommunikationsnetzes Dienst-Signalisierungsnachrichten über das Signalisierungsnetz zu. Bei diesen Dienst-Signalisierungsnachrichten handelt es sich hierbei um Nachrichten des SCCP Protokolls (SCCP = Signalling Connection Control Part). Um eine Dienst-Signalisierungsnachrichten an eine Zielvermittlungsstelle zu übertragen, trägt eine Ursprungsvermittlungsstelle einen sogenannten Global Title, bei dem es sich um die Rufnummer eines Teilnehmers der Zielvermittlungsstelle handelt, als Zielkennung in die Dienst-Signalisierungsnachrichten ein. Die Dienst-Signalisierungsnachrichten werden sodann zu einem speziellen Signalisierungsknoten des Kommunikationsnetzes geleitet. Dieser Signalisierungsknoten ersetzt sodann den Global Title durch den sogenannten Signalling Point Code (SPC), bei dem es sich um die Adresse der Zielvermittlungsstelle innerhalb des Signalisierungsnetzes handelt. Gemäß dieser Adresse werden die Dienst-Signalisierungsnachrichten sodann durch das Signalisierungsnetz zu der Zielvermittlungsstelle geleitet.

Es besteht nun das Problem, daß diese speziellen ISDN-Dienste, bei denen eine Übermittlung von Dienst-Signalisierungsnachrichten zur Diensterbringung notwendig ist, in einer Netzumgebung, in der sich Kommunikationsnetze verschiedener Netzbetreiber einen gemeinsamen Nummerierungsbereich teilen, nicht mehr durchgehend korrekt erbracht werden.

Der Erfindung liegt so die Aufgabe zugrunde, die Erbringung von Telekommunkationsdiensten zu verbessern, für die eine Übermittlung von Dienst-Signalisierungsnachrichten notwendig ist.

Diese Aufgabe wird gelöst durch ein Verfahren zur Übermittlung von Dienst-Signalisierungsnachrichten zwischen Vermittlungsstellen nach der Lehre von Anspruch 1, einen Konvertierungsknoten zum Anschluß an ein Signalisierungsnetz nach der Lehre von Anspruch 8, und eine Dienststeuereinrichtung zum Anschluß an ein Kommunikationsnetz nach der Lehre von Anspruch 9.

Der Erfindung liegt hierbei der Gedanke zugrunde, daß aufgrund von geographischbedingten oder netzbetreiberbedingten Portierungen von Teilnehmerrufnummern das Routing von Dienst-Signalisierungsnachrichten derart beeinflußt werden kann, daß Dienst-Signalisierungsnachrichten nicht mehr oder nicht mehr korrekt zugestellt werden: Eine Dienst-Signalisierungsnachricht, die noch eine Teilnehmerkennung als Zielkennung enthält, wird nun zu einem Konvertierungsknoten geleitet. Der Konvertierungsknoten ersetzt, mittels Zugriff auf die beim Verbindungsaufbau eines Nutzka nals verwendete Portierungs-Datenbank, im Fall einer Portierung der der Teilnehmerkennung entsprechenden Teilnehmerrufnummer die Teilnehmerkennung durch die zugeordnete portierte Teilnehmerkennung.

Die Erfindung hat folgende Vorteile: Die Dienst-Signalisierungsnachrichten werden korrekt übermittelt und die Dienste ohne Veränderung der Dienstelogik korrekt erbracht. Die erfindungsgemäße Lösung ist weiter kostengünstig und mit geringem Aufwand in existierende Vermittlungssysteme integrierbar: Es sind keine Änderungen des Signalisierungsnetzes oder von Komponenten des Signalisierungsnetzes notwendig. Der zusätzliche Konvertierungsknoten ist besonders kostengünstig realisierbar, da er zur Realisierung seiner Funktion auf für einen anderen Zweck bereits existierende Komponenten, nämlich die Portierungs-Datenbank, zurückgreift.

Die Anwendung der Erfindung ist insbesondere vorteilhaft in einer Netzumgebung, in der Kommunikationsnetze verschiedener, konkurrierender Netzbetreiber nebeneinander existieren und in der die Forderung der Rufnummernportabilität existiert. Ein weiterer vorteilhafter Anwendungsfall ist der eines Kommunikationsnetzes, in der die Forderung der Rufnummernportabilität zwischen verschiedenen Teilnehmervermittlungsstellen besteht.

Vorteilhafte Ausgestaltungen der Erfindung sind den Unteransprüchen zu entnehmen.

Es ist hierbei vor allem vorteilhaft, den Konvertierungsknoten in eine Dienststeuereinrichtung zu integrieren, die die Portierung von Teilnehmerrufnummern beim Aufbau von Nutzkanalverbindungen steuert. Dadurch wird der für die Durchführung der Erfindung notwendige technische Aufwand weiter verringert, die Verbesserung kann noch kostengünstiger und schneller in existierende Systeme integriert werden. Im folgenden wir die Erfindung unter Zuhilfenahme beiliegender Zeichnungen beispielhaft erläutert.
- Fig. 1: zeigt eine funktionelle Darstellung eines Kommunikationssystems.
- Fig. 2a: zeigt ein Ablaufdiagramm einer Übermittlung von Dienst-Signalisierungsnachrichten gemäß eines ersten Ausführungsbeispiels.
- Fig. 2b: zeigt ein Ablaufdiagramm einer Übermittlung von Dienst-Signalisierungsnachrichten gemäß eines zweiten Ausführungsbeispiels.
- Fig. 3: zeigt Blockschaltbild einer erfindungsgemäßen Dienststeuereinrichtung.

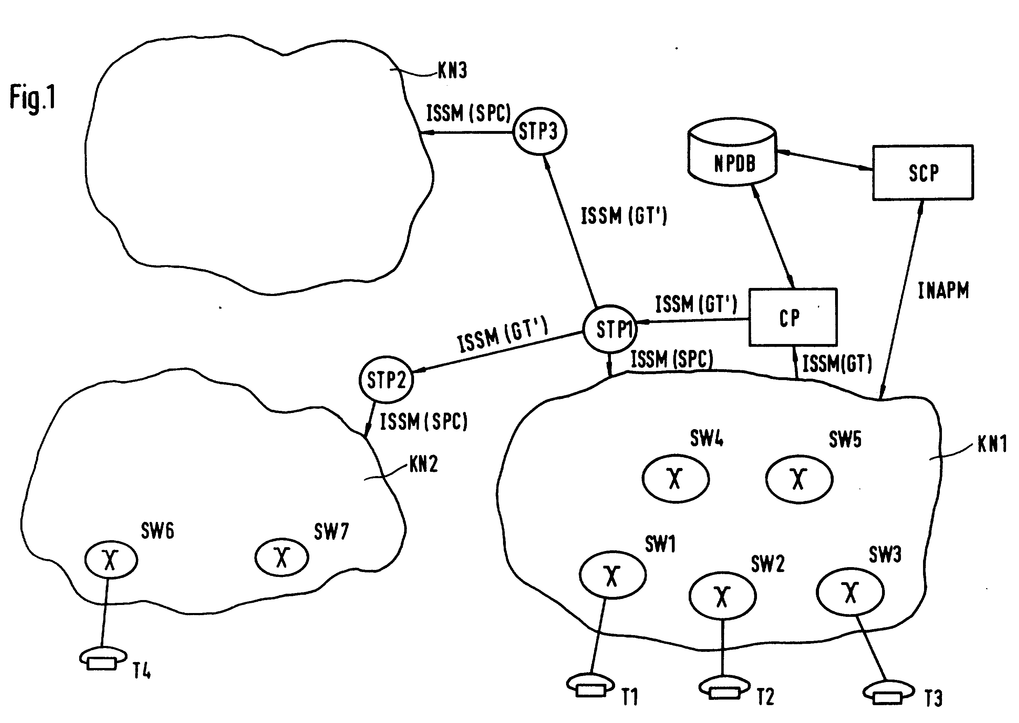

Anhand von Fig. 1 und Fig. 2a wird nun ein erstes Ausführungsbeispiel der Erfindung erläutert:

Fig. 1 zeigt ein Kommunikationssystem mit drei Kommunikationsnetzen KN1 bis KN3, vier Endgeräten T1 bis T4, drei Signalisierungsknoten STP1 bis STP3, einem Konvertierungsknoten CP, einem Dienststeuerknoten SCP und einer Datenbank NPDB. Zwischen den Signalisierungsknoten STP1 bis STP3, dem Konvertierungsknoten CP und den Kommunikationsnetzen KN1 bis KN3 werden Dienst-Signalisierungsnachrichten ISSM(GT), ISSM(GT') und ISSM(SPC) gesendet.

Die Kommunikationsnetze KN1 bis KN3 sind Fernsprechnetze, vorzugsweise ISDN-Netze (ISDN = Integrated Services Digital Network), die verschiedenen Teilnehmeranschlußnetzbetreibern zugeordnet sind, die sich einen gemeinsamen Nummerierungsbereich teilen. Weiter ist Rufnummernportabilität zwischen Teilnehmern dieser Kommunikationsnetze möglich. Die Anzahl der Kommunikationsnetze KN1 bis KN3 ist hierbei beispielhaft gewählt. Die Endgeräte T1 bis T4 sind für den Anschluß an die Kommunikationsnetze KN1 bis KN3 geeignete Endgeräte, beispielsweise ISDN-Fernsprechgeräte, Faxgeräte oder Computer.

Es ist auch möglich, daß es sich bei den Kommunikationsnetze KN1 bis KN3 um Mobilfunknetze handelt, beispielsweise nach dem GSM Standard. Es ist auch möglich, daß es sich bei den Kommunikationsnetzen KN1 bis KN3 um breitbandigere Kommunikationsnetze handelt, die neben der Sprach- auch eine Bildkommunikation zwischen den Teilnehmern ermöglichen.

Die Kommunikationsnetze KN1 bis KN3 weisen jeweils mehrere Vermittlungsstellen auf, von denen in Fig. 1 beispielhaft die Vermittlungsstellen SW1 bis SW5 des Kommunikationsnetzes KN1 und die Vermittlungsstellen SW6 bis SW7 des Kommunikationsnetzes KN2 gezeigt sind. Die Vermittlungsstellen SW1, SW2, SW3, SW6 und SW7 stellen hierbei Teilnehmervermittlungsstellen dar, an die die Endgeräte T1, T2, T3 bzw. T4 angeschlossen sind. Die Vermittlungsstellen SW4 und SW5 stellen Transitvermittlungsstellen dar.

Die Vermittlungsstellen SW1 bis SW5 des Kommunikationsnetzes KN1 sind untereinander hierarchisch über Nutzkanäle verbunden, wobei die Teilnehmeranschlußvermittlungsstellen SW1 bis SW3 die untere und die Transitvermittlungsstelle SW4 und SW5 die obere Hirarchieebene darstellen. Weiter sind die Vermittlungsstellen untereinander über Signalisierungskanäle verbunden, über die Signalisierungsnachrichten zwischen den Vermittlungsstellung ausgetauscht werden. Das so gebildete Signalisierungsnetz entspricht hierbei beispielsweise dem CCITT Signalisierungssytem Nr. 7 und enthält neben den Vermittlungsstellen auch Signalisierungspunkte, die auch als Signalling Transfer Points (STP) bezeichnet werden. Diese Signalisierungspunkte führen u. a. die Vermittlung der über das Signalisierungsnetz übertragenen Signalisierungsnachrichten durch. Innerhalb des Signalisierungsnetzes besteht hierbei ein eigenes Adressierungsschema. Signalisierungsnachrichten werden von den Signalisierungsknoten gemäß einer Vermittlungsstellen-Kennung, dem sogenannten Signalling Point Code, vermittelt.

Die Vermittlungsstellen der Kommunikationsnetze KN2 und KN3 sind auf dieselbe Weise wie die des Kommunikationsnetzes KN1 miteinander verbunden. Weiter sind die Kommunikationsnetze KN1 bis KN3, die ja unterschiedlichen Netzbetreibern zugeordnet sind, auch untereinander über Nutzkanalbündel verbunden. Diese Nutzkanalbündel verbinden hierbei jeweils zwei Transitvermittlungsstellen, eine des einen Kommunikationsnetzes und eine des anderen Kommunikationsnetzes. Auch die Signalisierungsnetze der Kommunikationsnetze KN1 bis KN3 sind miteinander verbunden und bilden ein gemeinsames Signalisierungsnetz. Diese Verknüpfung erfolgt durch Verknüpfung von Signalisierungsknoten der einzelnen Kommunikationsnetze über Signalisierungskanäle.

Die Signalisierungsknoten STP1 bis STP3 stellen besonders ausgestaltete Signalisierungsknoten des gemeinsamen Signalisierungsnetzes der Kommunikationsnetze KN1 bis KN3 dar. Diese Signalisierungsknoten setzen eine Teilnehmerkennung, die als Zieladresse in einer Dienst-Signalisierungsnachricht eingetragen ist in die Vermittlungsstellen-Kennung der dieser Teilnehmerkennung zugeordneten Vermittlungsstelle um, also in das interne Adressierungsschema des Signalisierungsnetzes. Ein solcher Signalisierungsknoten wird auch aus Signalling Relay Point bezeichnet.

In der Datenbank NPDB sind Portierungsdaten gespeichert, die Datenbank NPDB stellt somit eine Portierungs-Datenbank dar. Diese Portierungsdaten weisen speziellen Teilnehmerkennungen eine Portierungskennung zu. Die speziellen Teilnehmerkennungen sind hierbei die Teilnehmerkennungen, beispielsweise die Rufnummern, derjenigen Teilnehmer, die nicht über ein an das Kommunikationsnetz KN1 angeschlossenes Endgerät erreichbar sind, sondern über ein an eines der übrigen Kommunikationsnetze KN2 oder KN3 angeschlossenes Endgerät erreichbar sind. Als Portierungskennung ist dann jeweils eine Kennung desjenigen Kommunikationsnetzes zugeordnet, über das der Teilnehmer erreichbar ist. Es ist auch möglich, daß als Portierungskennung eine Kennung der Teilnehmervermittlungsstelle zugeordnet ist, über die der Teilnehmer erreichbar ist.

Eine weitere Möglichkeit besteht darin, daß bestimmte Zahlenbereiche der Teilnehmerkennung jeweils für bestimmte Kommunikationsnetze reserviert sind. Ist ein Teilnehmer nicht an ein dem Zahlenbereich seiner Teilnehmerkennung entsprechendes Kommunikationsnetz angeschlossen, so ist seiner Teilnehmerkennung in der Datenbank NPDB eine Portierungskennung zugeordnet, die auf dasjenige Kommunikationsnetz verweist, unter dem er erreichbar ist.

Die Datenbank NPDB setzt auf derselben Rechnerplatform wie der Dienststeuerknoten SCP auf. Es ist jedoch auch möglich, daß die Datenbank NPDB auf der derselben Rechnerplatform wie der Konvertierungspunkt CP aufsetzt oder auf einer separate, eigenständigen Rechnerplattform aufsetzt.

Der Dienststeuerknoten SCP kommuniziert mit einer oder mehreren speziell ausgestalteten Vermittlungsstellen des Kommunikationsnetzes KN1 über das Signalisierungsnetz. Diese Vermittlungsstellen weisen eine sogenannte Service-Switching-Funktionalität auf und entsprechen ebenso wie der Dienststeuerknoten SCP in ihrer Funktionalität den Spezifikationen der IN Architektur (IN = Intelligent Network, siehe beispielsweise ITU-T Recommendation Q.1214). Der Dienststeuerknoten verfügt hierbei über eine Dienstelogik, die mittels Zugriff auf die Portierungs-Datenbank NPDB im Kommunikationsnetz KN1 folgenden Portierungsdienst für den Aufbau von Nutzkanalverbindungen bereitstellt:

Beim Verbindungsaufbau einer Nutzkanalverbindung entnimmt eine Dienstvermittlungsstelle die gerufene Rufnummer als Teilnehmerkennung des gerufenen Teilnehmers der Verbindungsanforderungs-Nachricht und transportiert sie als Nutzlast in einer IN-Signalisierungsnachricht INAPM zum Dienststeuerpunkt SCP. Der Dienststeuerpunkt SCP greift auf die Datenbank NPDB zu und ermittelt, ob es sich um eine portierte Teilnehmerkennung handelt. Handelt es sich um eine solche, so meldet er die zugeordnete Portierungskennung als Nutzlast einer IN-Signalisierungsnachricht INAPM an die Dienstvermittlungsstelle zurück. Diese stellt sodann die Portierungskennung der Teilnehmerkennung voran und der Nutzkanal wird gemäß dieser so erweiterten Teilnehmerkennung aufgebaut.

Der Konvertierungsknoten CP dient der Konvertierung der Zielkennungen, also der Zieladressen, von Dienst-Signalisierungsnachrichten. Solche Dienst-Signalisierungsnachrichten werden zwischen Vermittlungsstellen der Kommunikationsnetze KN1 bis KN3 ausgetauscht und dienen der Steuerung von den Kommunikationsnetzen KN1 bis KN3 erbrachten Telekommunikationsdiensten. Ein Beispiel für solche Dienste sind folgende ISDN Zusatzdienste:

Zum einen der Rückruf bei Besetzt Dienst. Dieser Dienst kann aktiviert werden, wenn ein gerufener Teilnehmer besetzt ist. Wird der Dienst vom rufenden Teilnehmer aktiviert, so senden die Dienstlogik in der Vermittlungsstelle des gerufenen Teilnehmers der Vermittlungsstelle des rufenden Teilnehmer eine Dienst-Signalisierungsnachricht zu, wenn der gerufene Teilnehmer nicht mehr besetzt ist. Ein anderer Dienst ist der sogenannte short-message service. In diesem Fall sendet eine Vermittlungsstelle eine Dienst-Signalisierungsnachricht mit einer kurzen Textnachricht an eine andere Vermittlungsstelle, die diese Nachricht sodann an das Endgerät eines an sie angeschlossenen Teilnehmers weitersendet.

In diesen Beispielen werden die Dienst-Signalisierungsnachrichten über das SCCP Protokoll des Signalisierungssystems Nr. 7 ausgetauscht. Von der Ursprungsvermittlungsstelle wird als Zielkennung in die Dienst-Signalisierungsnachricht ISSM(GT) eine Teilnehmerkennung GT eines Teilnehmers der Zielvermittlungsstelle eingetragen. Der Konvertierungsknoten CP liest die Zielkennung, bei der es sich um die Teilnehmerkennung GT handelt, aus der Signalisierungsnachricht ISSM(GT) aus und überprüft mittels Zugriff auf die Datenbank NPDB, ob diese portiert ist und ihr somit eine Portierungskennung zugeordnet ist. Ist dies der Fall, so ermittelt sie mittels Zugriff auf die Datenbank NPDB die zugeordnete portierte Teilnehmerkennung GT' und ersetzt die Zielkennung in der Dienst-Signalisierungsnachricht ISSM(GT) durch diese zugeordnete portierte Teilnehmerkennung GT'. Ist dies nicht der Fall, so verändert sie die Zielkennung nicht.

Die portierte Teilnehmerkennung GT' wird wie folgt ermittelt: Besteht die zugeordnete Portierungskennung aus einer Netzkennung oder Betreiberkennung des Zielnetzes der Dienst-Signalisierungsnachricht ISSM(GT), so wird diese Kennung der Teilnehmerkennung GT als Präfix vorangestellt und das Präfix und die Teilnehmerkennung GT bilden zusammen die portierte Teilnehmerkennung GT'. Besteht die Portierungskennung aus einer Wegeleitkennung der Zielvermittlungsstelle (auch als routing number bezeichnet), an die die Dienst-Signalisierungsnachricht ISSM(GT) gerichtet ist, so wird die portierte Teilnehmerkennung GT' von der Wegeleitkennung gebildet. Es ist hier auch möglich, daß die Teilnehmerkennung GT zusätzlicher zur Wegeleitkennung eingetragen wird, also beide Kennungen zusammen die portierte Teilnehmerkennung GT' bilden.

Der Ablauf der Übertragung einer Dienst-Signalisierungsnachricht über das Signalisierungsnetz wird nun anhand von Fig. 2a verdeutlicht:

Fig. 2a zeigt die Vermittlungsstellen SW1, SW2 und SW6, die Signalisierungsknoten STP1 und STP2, den Konvertierungsknoten CP und die Dienst-Signalisierungsnachrichten ISSM(GT1), ISSM(GT1'), ISSM(SPC1), ISSM(GT2) und ISSM(SPC2).

Die Dienst-Signalisierungsnachricht ISSM(GT1), die an die Vermittungsstelle SW6 gerichtet ist und die Teilnehmerkennung GT1 eines Teilnehmers dieser Vermittlungsstelle als Zielkennung enthält, wird durch das Signalisierungsnetz von der Vermittlungsstelle SW1 an den Konvertierungsknoten CP geleitet. Dieser ersetzt die Teilnehmerkennung GT1 durch die portierte Teilnehmerkennung GT1', da der zugeordnete Teilnehmer über ein anderes Kommunikationsnetz, das Kommunikationsnetz KN2 erreichbar ist. Die Dienst-Signalisierungsnachricht ISSM(GT1') mit der portierten Teilnehmerkennung als Zielkennung wird sodann durch das Signalisierungsnetz zu dem Signalisierungsknoten STP1 geleitet. Dieser erkennt, daß die Dienst-Signalisierungsnachricht ISSM(GT1') in das Kommunikationsnetz KN2 zu leiten ist und leite diese Nachricht an den Signalisierungsknoten STP2 weiter, der für dieses Kommunikationsnetz zuständig ist. Der Signalisierungsknoten STP2 übersetzt die Teilnehmerkennung GT1' in die interne Vermittlungsstellen-Kennung SPC1 der Vermittlungsstelle SW6, der diese Teilnehmerkennung zugeordnet ist, und leitet eine Dienst-Signalisierungsnachricht ISSM(SPC1) mit dieser Kennung als Zielkennung weiter. Die Dienst-Signalisierungsnachricht ISSM(SPC1) wird sodann gemäß dieser Kennung durch das Signalisierungsnetz zur Vermittlungsstelle SW6 geleitet.

Empfängt der Konvertierungsknoten CP eine Dienst-Signalisierungsnachricht ISSM(GT2), deren Teilnehmerkennung GT2 die Kennung eines Teilnehmers der Vermittlungsstelle SW2 ist, so führt sie keine Ersetzung der Zielkennung durch. Dienst-Signalisierungsnachricht ISSM(GT2) wird vom Signalisierungsknoten STP1 in die Dienst-Signalisierungsnachricht ISSM(SPC2) umgesetzt, die die Vermittlungsstellen-Kennung SPC2 der Vermittlungsstelle SW2 als Zielkennung enthält. Die Dienst-Signalisierungsnachricht ISSM(SPC2) wird sodann durch das Signalisierungsnetz zur Zielvermittlungsstelle SW2 geleitet.

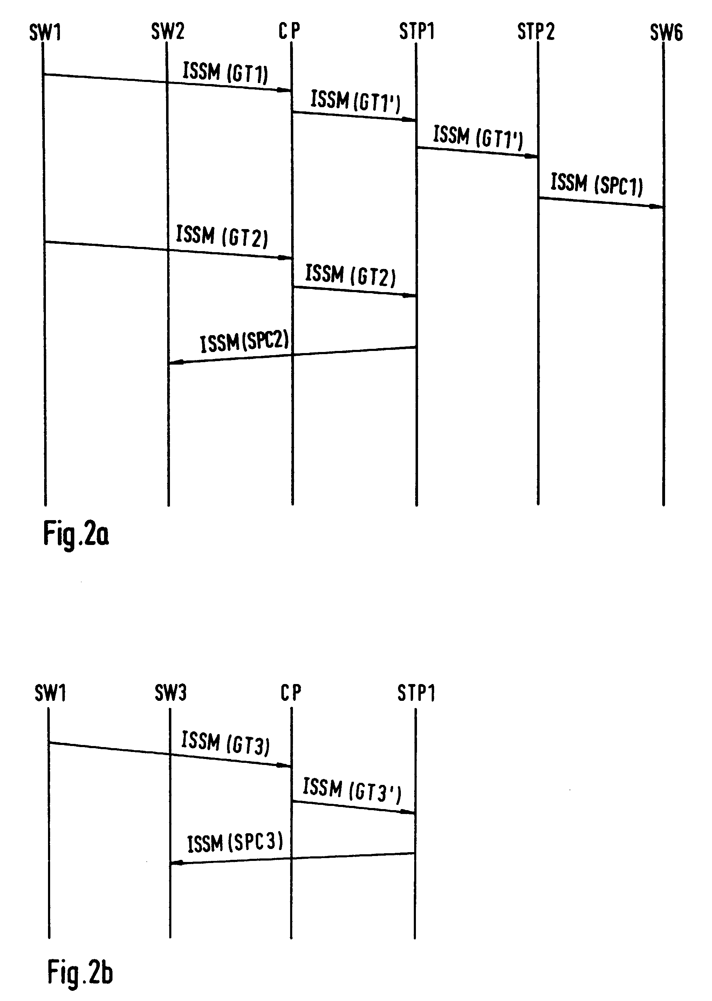

Anhand von Fig. 2b wird nun eine weiteres Ausführungsbeispiel der Erfindung erläutert.

Der Konvertierungsknoten CP empfängt eine Dienst-Signalisierungsnachricht ISSM(GT3), deren Teilnehmerkennung GT3 die Kennung eines Teilnehmers des Kommunikationsnetzes KN1 ist. Bei der Teilnehmerkennung GT3 handelt es sich um ein portierte Teilnehmerkennung. Diese Teilnehmerkennung entspricht nicht dem Nummernbereich der Teilnehmervermittlungsstelle, an den der Teilnehmer angeschlossen ist. In diesem Fall ist die Ziel-Teilnehmervermittlungsstelle nicht mehr aus der Teilnehmerkennung ermittelbar. Die Datenbank NPDB enthält in diesem Ausführungsbeispiel Portierungsdaten, die den Teilnehmerkennungen solcher, innerhalb des Kommunikationsnetzes KN1 geographisch portierten Teilnehmer, jeweils eine Portierungskennung zuordnet, die diejenige Vermittlungstelle des Kommunikationsnetzes KN1 beschreibt, unter der der Teilnehmer erreichbar ist.

Der Konvertierungsknoten CP ersetzt nun durch Zugriff auf die Datenbank NPDB die Teilnehmerkennung GT3 durch die portierte Teilnehmerkennung GT3'. Die Dienst-Signalisierungsnachricht ISSM(GT3') mit der portierten Teilnehmerkennung als Zielkennung wird sodann durch das Signalisierungsnetz zu dem Signalisierungsknoten STP1 geleitet. Dieser erkennt, daß die Dienst-Signalisierungsnachricht ISSM(GT3') in das Kommunikationsnetz KN1 zu leiten ist übersetzt die Teilnehmerkennung GT3' in die interne Vermittlungsstellen-Kennung SPC3. Der Signalisierungsknoten STP1 leitet eine Dienst-Signalisierungsnachricht ISSM(SPC3) mit dieser Kennung als Zielkennung weiter die Dienst-Signalisierungsnachricht ISSM(SPC3) wird gemäß der Zielkennung durch das Signalisierungsnetz zur Vermittlungsstelle SW3 geleitet.

Es ist auch möglich, daß die Portierungs-Datenbank NPDB weiter Portierungsdaten über eine geographische Portierung von Teilnehmerkennung der Kommunikationsnetze KN2 und KN3 enthält. Weiter ist es möglich, daß die Portierungs-Datenbank NPDB sowohl Portierungsdaten über eine Betreiberportierung also auch über eine geographische Portierung enthält.

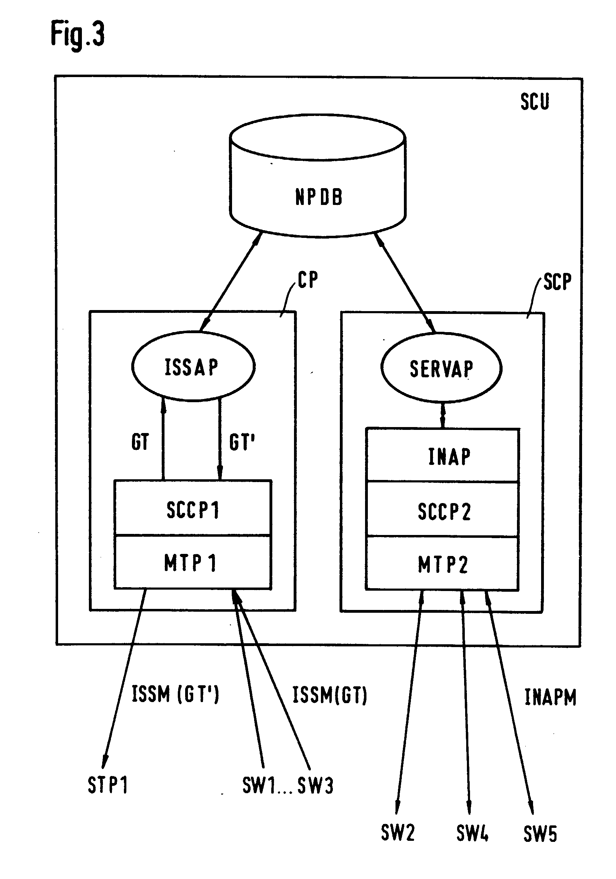

Fig. 3 zeigt eine Dienststeuereinrichtung SCU mittels der das Verfahren nach dem ersten und nach dem zweiten Ausführungsbeispiel auf vorteilhafte Weise durchgeführt werden kann.

Die Dienststeuereinrichtung SCU weist eine Rechnerplattform auf, die über Anschlußbaugruppen zur Kommunikation über das Signalisierungsnetz verfügt. Auf diese Rechnerplattformen setzen Programmeinheiten auf, die die Funktionen des Konvertierungsknotens CP, des Dienststeuerknotens SCP und der Datenbank NPDB erbringen. Für den Konvertierungsknoten CP sind dies die Programmeinheiten MTP1, SCCP1 und ISSAP, für den Dienststeuerknoten SCP sind dies die Programmeinheiten MTP2, SCCP2, INAP und SERVAP.

Die Programmeinheiten MTP1, MTP2, SCCP1, SCCP2 und INAP stellen die Protokoll-Funktionen des Mitteilungsübermittlungsteils, des Steuerteil für Zeichengabetransaktionen und den Intelligent Network Anwendungsteil dar.

Die Programmeinheit SERVAP wird von einem Anwendungsprogramm gebildet und stellt die Dienstelogik eines IN-Dienstes dar, der die Portierung der gerufenen Rufnummer beim Aufbau einer Nutzkanalverbindung steuert. Die Programmeinheit SERVAP tauscht über den von den Programmeinheiten MTP2, SCCP 2 und INAP bereitgestellten Protokoll-Stack mit den Dienstvermittlungsstellen SW2, SW4 und SW5 Daten aus. Diese Vermittlungsstellen senden der Programmeinheit SERVAP Rufnummern zu, die Programmeinheit SERVAP ermittelt mittels Zugriff auf die Datenbank NPDB hierzu die portierte Rufnummer und sendet diese an die jeweilige der Dienstvermittlungsstellen SW2, SW4 und SW5 zurück.

Die Programmeinheit ISSAP wird von einem Anwendungsprogramm gebildet, das Ersetzen von Zielkennungen von Dienst-Signalisierungsnachrichten steuert. Die Programmeinheit ISSAP empfängt über den von den Programmeinheiten MTP1 und SCCP2 bereitgestellten Protokoll-Stack Dienst-Signalisierungsnachrichten ISSM(GT) von den Teilnehmervermittlungsstellen SW1 bis SW3 des Kommunikationsnetzes KN1 und sendet Dienst-Signalisierungsnachrichten ISSM(GT) oder Dienst-Signalisierungsnachrichten ISSM(GT') an den Signalisierungsknoten STP1.

Die Programmeinheit ISSAP liest aus den Dienst-Signalisierungsnachrichten ISSM(GT) die Zielkennung aus, ermittelt mittels Zugriff auf die Datenbank NPDB zu der Teilnehmerkennung GT die portierte Teilnehmerkennung GT' und leitet die Dienst-Signalisierungsnachrichten ISSM(GT') mit der portierten Teilnehmerkennung GT' als Zielkennung zum Signalisierungsknoten STP1 weiter.

Es ist auch möglich, daß die Programmeinheit SCP mit Vermittlungsstelle des Kommunikationsnetzes KN1 nicht gemäß den in den IN Spezifikationen festgelegten Mechanismen kommuniziert. Diese Kommunikation könnte gemäß proprietärer Protokolle oder auch über die Kommunikations-Infrastruktur eines objektorientierten Datenverarbeitungssystems, beispielsweise gemäß der OMG Architektur (OMG = Object Management Group) erfolgen.

Es ist weiter möglich, daß die Programmeinheiten ISSAP, SERVAP, SCCP1, MTP1, INAP, SCCP2 und MTP2 auf der Rechnerplattform einer Vermittlungsstelle des Kommunikationsnetzes KN1 ablaufen.

## Patentansprüche

1. Verfahren zur Übermittlung von Dienst-Signalisierungsnachrichten (ISSM(GT), ISSM(GT'), (ISSM(SPC)) zwischen Vermittlungsstellen (SW1, SW2, SW3, SW6, SW7), die einem Kommunikationsnetz oder verschiedenen Kommunikationsnetze (KN1, KN2) zugeordnet und über ein Signalisierungsnetz verbunden sind, wobei bei dem Verfahren die Dienst-Signalisierungsnachrichten (ISSM(GT), ISSM(GT'), (ISSM(SPC)) gemäß einer in der jeweiligen Dienst-Signalisierungsnachricht eingetragenen Zielkennung (GT, GT', SPC) durch das Signalisierungsnetz von einer Ursprungsvermittlungsstelle zu einer Zielvermittlungsstelle geleitet werden, **dadurch gekennzeichnet,** daß eine Dienst-Signalisierungsnachricht (ISSM(GT)) mit einer Teilnehmerkennung (GT) eines Teilnehmers der Zielvermittlungsstelle als Zielkennung zu einem Konvertierungsknoten (CP) geleitet wird, daß der Konvertierungsknoten (CP) die Zielkennung aus der Dienst-Signalisierungsnachricht ausliest und die Zielkennung durch eine der Teilnehmerkennung (GT) zugeordneten portierten Teilnehmerkennung (GT') ersetzt, wenn die Teilnehmerkennung einem portierten Teilnehmer zugeordnet ist, und daß der Konvertierungsknoten (CP) die zugeordnete portierte Teilnehmerkennung (GT') durch Zugriff auf eine beim Aufbau von Nutzkanalverbindungen verwendete Portierungs-Datenbank (NPDB) ermittelt.

2. Verfahren nach Anspruch 1, dadurch gekennzeichnet, daß die Dienst-Signalisierungsnachricht (ISSM(GT')) von dem Konvertierungsknoten (CP) an einen Signalisierungsknoten (STP1, STP2, STP3) geleitet wird und daß der Signalisierungsknoten (STP1, STP2, STP3) die Teilnehmerkennung (GT) oder die portierte Teilnehmerkennung (GT') durch eine dieser zugeordneten Vermittlungsstellen-Kennung (SPC) ersetzt.

3. Verfahren nach Anspruch 1, dadurch gekennzeichnet, daß die Zielkennung durch die zugeordnete portierte Teilnehmerkennung (GT') ersetzt wird, wenn die Ursprungsvermittlungsstelle und die Zielvermittlungsstelle Kommunikationsnetzen verschiedener Netzbetreiber zugeordnet sind.

4. Verfahren nach Anspruch 1, dadurch gekennzeichnet, daß die Zielkennung durch die zugeordnete portierte Teilnehmerkennung (GT') ersetzt wird, wenn die Teilnehmerkennung (GT) nicht dem Nummernbereich der Zielvermittlungsstelle entspricht.

5. Verfahren nach Anspruch 1, dadurch gekennzeichnet, daß die Dienst-Signalisierungsnachricht eine Nachricht (ISSM(GT), ISSM(GT'), (ISSM(SPC)) des SCCP Protokolls darstellt.

6. Verfahren nach Anspruch 1, dadurch gekennzeichnet, daß die zugeordnete portierte Teilnehmerkennung (GT') aus einem Präfix und der Teilnehmerkennung (GT) gebildet wird, wobei das Präfix (GT') das Kommunikationsnetz des von der Teilnehmerkennung bezeichneten Teilnehmers adressiert.

7. Verfahren nach Anspruch 1, dadurch gekennzeichnet, daß die portierte Teilnehmerkennung aus einer Wegeleitkennung und der Teilnehmerkennung gebildet wird, wobei die Wegeleitkennung den Teilnehmeranschluß des von der Teilnehmerkennung bezeichneten Teilnehmers adressiert.

8. Konvertierungsknoten (CP) zum Anschluß an ein Signalisierungsnetz, über das Vermittlungsstellen (SW1, SW2, SW3, SW6, SW7), die einem Kommunikationsnetz oder verschiedenen Kommunikationsnetzen (KN1, KN2) zugeordnet sind, miteinander verbunden sind,
**dadurch gekennzeichnet**, daß der Konvertierungsknoten (CP) mit Kommunikationsmitteln (SCCP1, MTP1) zum Empfang von Dienst-Signalisierungsnachrichten versehen ist, die gemäß einer Zielkennung von einer Ursprungsvermittlungsstelle zu einer Zielvermittlungsstelle geleitet werden, und daß der Konvertierungsknoten (CP) mit Steuermitteln (ISSAP) versehen ist, die so ausgestaltet sind, daß sie aus einer Dienst-Signalisierungsnachricht (ISSM(GT)) mit einer Teilnehmerkennung (GT) als Zielkennung die Zielkennung auslesen, die Zielkennung durch eine der Teilnehmerkennung (GT) zugeordneten portierten Teilnehmerkennung (GT') ersetzten, wenn die Teilnehmerkennung (GT) einem portierten Teilnehmer zugeordnet ist, und die zugeordnete portierte Teilnehmerkennung (GT') durch Zugriff auf eine beim Aufbau von Nutzkanalverbindungen verwendete Portierungs-Datenbank (NPDB) ermitteln.

9. Dienststeuereinrichtung (SCU) zum Anschluß an ein Kommunikationsnetz (KN1), wobei die Dienststeuereinrichtung (SCU) mit ersten Steuermitteln (SERVAP) zum Steuern des Aufbaus von Nutzkanalverbindungen mittels Zugriff auf eine Portierungs-Datenbank (NPDB) versehen ist,
**dadurch gekennzeichnet**, daß die Dienststeuereinrichtung (SCU) mit Kommunikationsmitteln (MTP1, SCCP1) zum Empfang von Dienst-Signalisierungsnachrichten (ISSM(GT)) versehen ist, die gemäß einer Zielkennung über ein Signalisierungsnetz von einer Ursprungsvermittlungsstelle zu einer Zielvermittlungsstelle geleitet werden, und daß die Dienststeuereinrichtung (SCU) mit zweiten Steuermitteln (ISSAP) versehen ist, die so ausgestaltet sind, daß sie aus einer Dienst-Signalisierungsnachricht (ISSM(GT)) mit einer Teilnehmerkennung als Zielkennung die Zielkennung auslesen, die Zielkennung durch eine der Teilnehmerkennung zugeordneten portierten Teilnehmerkennung (GT') ersetzten, wenn die Teilnehmerkennung (GT) einem portierten Teilnehmer zugeordnet ist, und die zugeordnete portierte Teilnehmerkennung (GT') durch Zugriff auf eine beim Aufbau von Nutzkanalverbindungen verwendete Portierungs-Datenbank (NPDB) ermitteln.
